# EUROPEAN PATENT APPLICATION

(11) **EP 3 079 115 A1**
(43) Date of publication of application: **12.10.2016**
(21) Application number: 14868476.4
(22) Date of filing: 09.09.2014
(51) Int. Cl.: G06Q 20/34, G06Q 20/42

(54) **METHOD AND SMART CARD FOR PROCESSING TRANSACTION DATA**

(30) Priority: 04.12.2013 CN 201310648305
(71) Applicant: Tendyron Corporation, Beijing 100083 (CN)
(72) Inventor: LI, Dongsheng, Beijing 100083 (CN)
(74) Representative: Maiwald Patentanwalts GmbH
(86) International application number: PCT/CN2014/086150
(87) International publication number: WO 2015/081738

(57) **Abstract**

The present invention provides a method and system for processing transaction data. The method comprises: a smart card acquiring transaction request information; the smart card reading a state identification of the last transaction; if the state identification of the last transaction indicates that the last transaction is confirmed, the smart card performing check calculation on the transaction request information, and obtaining check data; the smart card outputting the check data, saving transaction information of this transaction into a transaction log, and completing this transaction; after completing this transaction, the smart card displaying key information of this transaction; if the smart card receives a confirmation operation for the key information of this transaction within a preset period of time, the smart card marking the state identification of this transaction as a confirmed identification according to the confirmation operation.

## Description

### FIELD

The present disclosure generally relates to the field of electronic technology, and more particularly, to a method for processing transaction data and a smart card.

### BACKGROUND

A dual interface smart card is a smart card with a contact interface and a contactless interface, i.e., the dual interface smart card can not only communicate with a smart card reader over a physical contact, but also communicate with the smart card reader over a contactless link which is wireless. However, as the dual interface smart card becomes more and more popular, criminals may conduct an identity theft under the prerequisite of not stealing directly the smart card but reading directly account information of the smart card by a contactless manner in the situation that an owner of the smart card does not know anything.

Since the identity theft may be conducted even though the owner does not loss his/her smart card, the owner cannot find the identity theft in time, such that the criminals may conduct the identity theft for many times. If the identity theft is not prevented timely, a security risk of the account of the owner's smart card will be further enlarged. Therefore, it is an urgent problem to be solved about how to reduce the security risk of the account of the owner's smart card due to continuous identity thefts.

### SUMMARY

The present disclosure aims to provide a method for processing transaction data and a smart card, and the problem to be solved is how to reduce a security risk of the account of the user's smart card due to continuous identity thefts.

A method for processing transaction data includes: acquiring by a smart card transaction request information; reading by the smart card a state identifier of a last transaction; performing by the smart card a check calculation on the transaction request information so as to acquire checked data, if the state identifier of the last transaction indicates that the last transaction is confirmed; outputting by the smart card the checked data and storing by the smart card transaction information of this transaction into a transaction log so as to complete this transaction; displaying by the smart card key information of this transaction after this transaction is completed; and marking by the smart card a state identifier of this transaction as a confirmed identifier according to a confirmation operation, if the smart card receives the confirmation operation for the key information of this transaction within a predetermined period of time.

The method further has the following feature. The method further includes: outputting by the smart card prompt information for confirming the last transaction, if the state identifier of the last transaction indicates that the last transaction is not confirmed.

The method further has the following feature. The key information includes at least one of a transaction amount, transaction time and payee account information.

The method further has the following feature. The smart card marks the state identifier of this transaction as an unconfirmed identifier, if the smart card does not receive the confirmation operation for the key information of this transaction within the predetermined period of time.

The method further has the following feature. The confirmation operation is inputting a confirmation password.

The method further has the following feature. Marking by the smart card a state identifier of this transaction as a confirmed identifier according to a confirmation operation includes: validating by the smart card the confirmation password, and marking by the smart card the state identifier of this transaction as the confirmed identifier if the confirmation password is validated successfully.

A method for processing transaction data includes: acquiring by a smart card transaction request information; reading by the smart card a state identifier of a last transaction; performing by the smart card a check calculation on the transaction request information so as to acquire checked data, if the state identifier of the last transaction indicates that the last transaction is confirmed; outputting by the smart card the checked data; acquiring by a terminal the checked data and a password of the smart card, and sending by the terminal the password and the checked data; receiving and validating by a backend server the password and the checked data so as to acquire a validation result, and sending by the backend server the validation result; and receiving by the terminal the validation result, and processing by the terminal this transaction according to the validation result.

A smart card includes: an acquiring module, configured to acquire transaction request information; a reading module, connected to the acquiring module, and configured to read a state identifier of a last transaction after receiving the transaction request information; a calculating module, connected to the reading module, and configured to perform a check calculation on the transaction request information so as to acquire checked data if the state identifier of the last transaction indicates that the last transaction is confirmed; an outputting module, configured to output the checked data and to store transaction information of this transaction into a transaction log so as to complete this transaction; a displaying module, configured to display key information of this transaction after this transaction is completed; a receiving module, configured to receive a confirmation operation for the key information of this transaction; and a marking module, connected to the receiving module, and configured to mark a state identifier of this transaction as a confirmed identifier according to the confirmation operation, if the receiving module receives the confirmation operation for the key information of this transaction within a predetermined period of time.

The smart card further has the following feature. After the state identifier of the last transaction is read, the outputting module is further configured to: output prompt information for confirming the last transaction, if the state identifier of the last transaction indicates that the last transaction is not confirmed.

The smart card further has the following feature. The marking module is further configured to: mark the state identifier of this transaction as an unconfirmed identifier, if the confirmation operation for the key information of this transaction is not received within a predetermined period of time.

The smart card further has the following feature. The confirmation operation is inputting a confirmation password. The marking module includes: a validating unit, configured to validate the confirmation password; and a marking unit, configured to mark the state identifier of this transaction as the confirmed identifier if the confirmation password is validated successfully.

A method for processing transaction data includes: acquiring by a smart card transaction request information; reading by the smart card a state identifier of a last transaction after receiving the transaction request information, in which the state identifier is used to indicate whether the last transaction is confirmed; performing by the smart card a check calculation on the transaction request information so as to acquire checked data if the state identifier of the last transaction indicates that the last transaction is confirmed; outputting by the smart card the checked data and storing by the smart card transaction information of this transaction into a transaction log so as to complete this transaction; displaying by the smart card key information of this transaction after this transaction is completed; waiting by the smart card to receive a confirmation operation for the key information of this transaction; and updating by the smart card a state identifier of this transaction according to the confirmation operation if the confirmation operation for the key information of this transaction is received within a predetermined period of time.

The method further has the following feature. The method further includes: after the smart card reads the state identifier of the last transaction, outputting by the smart card prompt information for confirming the last transaction if the state identifier of the last transaction indicates that the last transaction is not confirmed.

The method further has the following feature. The key information includes at least one of a transaction amount, transaction time and payee account information.

The method further has the following feature. The smart card updates the state identifier of this transaction as an unconfirmed identifier if the smart card does not receive the confirmation operation for the key information of this transaction within the predetermined period of time.

The method further has the following feature. Waiting by the smart card to receive the confirmation operation for the key information of this transaction includes: receiving by the smart card a confirmation password; updating by the smart card the state identifier of this transaction according to the confirmation operation includes: validating by the smart card the confirmation password, and updating by the smart card the state information of this transaction as the confirmed identifier if the confirmation password is validated successfully.

A method for processing transaction data includes: acquiring by a smart card transaction request information; reading by the smart card a state identifier of a last transaction after receiving the transaction request information, in which the state identifier is used to indicate whether the last transaction is confirmed,; performing by the smart card a check calculation on the transaction request information so as to acquire checked data if the state identifier of the last transaction indicates that the last transaction is confirmed; outputting by the smart card the checked data; acquiring by a terminal the checked data and a password of the smart card, and sending by the terminal the password and the checked data; receiving and validating by a backend sever the password and the checked data so as to acquire a validation result, and sending by the backend sever the validation result; and receiving by the terminal the validation result, and processing by the terminal this transaction according to the validation result.

A smart card includes: an acquiring module, configured to acquire transaction request information; a reading module, connected to the acquiring module, and configured to read a state identifier of a last transaction after receiving the transaction request information, in which the state identifier is used to indicate whether the last transaction is confirmed; a calculating module, connected to the reading module, and configured to perform a check calculation on the transaction request information so as to acquire checked data if the state identifier of the last transaction indicates that the last transaction is confirmed; an outputting module, configured to output the checked data and to store transaction information of this transaction into a transaction log so as to complete this transaction; a displaying module, configured to display key information of this transaction after this transaction is completed; a receiving module, configured to receive a confirmation operation for the key information of this transaction; and an updating module, connected to the receiving module, and configured to update a state identifier of this transaction according to the confirmation operation if the receiving module receives the confirmation operation for the key information of this transaction within a predetermined period of time.

The smart card further has the following feature. After the state identifier of the last transaction is read, the outputting module is further configured to output prompt information for confirming the last transaction if the state identifier of the last transaction indicates that the last transaction is not confirmed.

The smart card further has the following feature. The updating module is further configured to update the state identifier of this transaction as an unconfirmed identifier if the confirmation operation for the key information of this transaction is not received within the predetermined period of time.

The smart card further has the following feature. The confirmation operation is inputting a confirmation password. The updating module includes: a validating unit, configured to validate the confirmation password; and an updating unit, configured to update the state identifier of this transaction as an unconfirmed identifier if the confirmation password is validated successftilly.

A computer-readable storage medium having stored therein computer instructions that, when executed, causes the above method for processing transaction data to be performed.

Compared to the related art, embodiments provided in the present disclosure require the user to confirm every transaction on the smart card once the smart card completes every transaction. When the user starts a new transaction, the smart card may detect whether the last transaction is confirmed by the user, and respond to operations of this transaction if the last transaction is confirmed. Since the criminal cannot confirm a transaction on the smart card after the identity theft, the smart card cannot respond to operations of a next transaction, such that the identity theft is prevented, thus reducing a security risk of the account of the user's smart card due to continuous identity thefts, avoiding continuous attacks and improving the safety of account.

### BRIEF DESCRIPTION OF THE DRAWINGS

To describe the technical solutions in the embodiments of the present disclosure more clearly, the accompanying drawings required for describing the embodiments are introduced briefly in the following. Obviously, the accompanying drawings in the following description are only some embodiments of the present disclosure, and persons of ordinary skill in the art may also derive other drawings from these accompanying drawings without creative efforts.
Fig. 1 is a flow chart showing an embodiment of a method for processing transaction data provided in the present disclosure.
Fig. 2 is a flow chart showing an embodiment of a method for processing transaction data provided in the present disclosure.
Fig. 3 is a block diagram showing an embodiment of a smart card provided in the present disclosure.

### DETAILED DESCRIPTION

The technical solutions in the embodiments of the present disclosure are clearly and completely described in the following with reference to the accompanying drawings in the embodiments of the present disclosure. Obviously, the embodiments in the following description are merely a part rather than all of the embodiments of the present disclosure. Based on the embodiments of the present disclosure, all other embodiments obtained by persons of ordinary skill in the art without creative efforts shall fall within the protection scope of the present disclosure.

In the specification, it should be understood that, relative terms such as "central", "longitudinal", "lateral", "above", "below", "front", "rear", "right", "left", "horizontal", "vertical", "top", "bottom", "inner", "outer" should be construed to refer to the orientation and positions as then described or as shown in the drawings under discussion. These relative terms are for convenience of description and do not require that the present disclosure be constructed or operated in a particular orientation. Moreover, it is not required that the present disclosure is constructed or operated in a particular orientation. In addition, terms such as "first" and "second" are used herein for purposes of description and are not intended to indicate or imply relative importance or significance or to imply the number of indicated technical features.

In the description of the present disclosure, it should be noted that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by persons of ordinary skill in the art according to the detail embodiment of the present disclosure.

In the following, embodiments of the present disclosure will be described in detail with reference to the accompanying drawings.

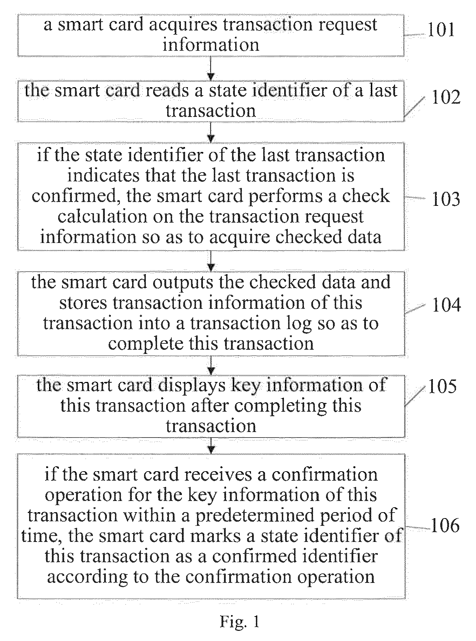

Fig. 1 is a flow chart showing an embodiment of a method for processing transaction data provided in the present disclosure. The method embodiment shown in Fig. 1 includes the following steps.

In step 101, a smart card acquires transaction request information.

The transaction request information at least includes a payment request or a transferring request, etc.

The transaction request may be acquired by the smart card in a contact manner or in a contactless manner.

In step 102, the smart card reads a state identifier of a last transaction.

Specifically, a transaction request refers to a reduction in the account amount. In order to avoid a situation that a current card swiping behavior is an identity theft conducted by a criminal in a contactless manner, it is determined whether the smart card confirms that the last card swiping behavior was conducted by a manual confirmation from an owner of the smart card. If the owner did not confirm the last transaction, this transaction will not be processed. For example, if a criminal conducts an identity theft in a contactless manner, he cannot confirm the first transaction manually because he does not hold the smart cart, and the owner may not confirm this transaction after knowing that the identity theft occurs. Therefore, when the criminal conducts another identity theft, the smart card does not accept the second transaction since the first transaction is not confirmed. Conversely, if the owner completes one transaction and confirms on the smart card manually, it indicates that the owner knows the last transaction and allows the next transaction, i.e., it indicates that the owner thinks that there is no identity theft on the smart card currently.

The state identifier may be one numerical value, for example, 0 and 1 may be used to represent. For example, 0 is used to indicate that the last transaction is not confirmed and 1 is used to indicate that the last transaction is confirmed. Certainly, in a practical application, any two identifiers may be used to represent these two states.

The state identifiers may be stored into a transaction log, which is easy to read and manage.

After the smart cards reads the state identifier of the last transaction, and if the state identifier of the last transaction indicates that the last transaction is not confirmed, the smart card outputs prompt information for confirming the last transaction. The prompt information may be displayed by a display device of the smart card or by a terminal connected to the smart card. If it is displayed by the smart card directly, less modification is made to the terminal, which reduces the maintenance cost of devices.

In step 103, if the state identifier of the last transaction indicates that the last transaction is confirmed, the smart card performs a check calculation on the transaction request information so as to acquire checked data.

For example, the checked data may be acquired via a MAC algorithm.

In step 104, the smart card outputs the checked data and stores transaction information of this transaction into a transaction log so as to complete this transaction.

Specifically, the communication mode used for outputting the checked data by the smart card is identical to the communication mode for acquiring the transaction request information. After the smart card outputs the checked data, the smart card may disconnect from an external device (such as a POS machine) so as to end this transaction, and store the transaction information of this transaction into the transaction log.

It should be noted that, based on steps 101-104, it can be seen that, the smart card completes the data transmission with the external device via one interaction, so as to complete the processing of the transaction request information. Under the premise of completing the basic processes, the number of times of interacting with the external device is controlled reasonably and effectively, thus reducing the possibility of attacks due to too many transactions.

In step 105, the smart card displays key information of this transaction after completing this transaction.

It should be noted that, compared to the situation in which a transaction is completed once the smart card outputs the checked data in the related art, after completing the transaction, the smart card may display key information via a display device disposed on the smart card so as to notify the user of details about this transaction and facilitate the user to know the consumption information of the smart card. The key information includes at least one of a transaction amount, transaction time and payee account (receipt account, or an account of a receiver) information.

In step 106, if the smart card receives a confirmation operation for the key information of this transaction within a predetermined period of time, the smart card marks a state identifier of this transaction as a confirmed identifier according to the confirmation operation.

The confirmation operation may be issued by the user via a confirm button disposed on the smart card. The user may complete the confirmation operation by pressing the confirm button on the smart card.

Certainly, the confirm button may include a plurality of buttons, each of which corresponds to a character. The user generates a confirmation password by selecting one or more of the plurality of buttons, and inputs the confirmation password as the confirmation operation.

The former way is easy to implement, which modifies the structure of the smart card slightly. The latter way is to complete the confirmation of transaction by the confirmation password. Since the complexity of the confirmation password is high, the occurrence of confirmation operations due to a misoperation from the owner may be reduced. In addition, the confirmation password may be validated in sequent steps so as to realize a safety validation.

Specifically, the confirmation operation is inputting the confirmation password. The smart cards receives and validates the confirmation password, and if the confirmation password passes the validation, the state identifier of this transaction is marked as the confirmed identifier, otherwise, the state identifier of this transaction is marked as an unconfirmed identifier.

It can be seen from this step that, by validating the confirmation operation via the confirmation password, the identity verification of the owner conducting the confirmation operation may be realized, thus further ensuring the safety of transaction and reducing the possibility of identity theft.

Certainly, if the smart card does not receive the confirmation operation for the key information of this transaction within the predetermined period of time, the smart card marks the state identifier of this transaction as the unconfirmed identifier.

Specifically, after the smart card displays the key information of this transaction, the smart card reckons the waiting time, if the waiting time exceeds the predetermined period of time, it indicates that the user does not confirm the key information of this transaction, and then the state identifier of this transaction is marked as the unconfirmed identifier.

Compared to the related art, method embodiments provided in the present disclosure require the user to confirm every transaction on the smart card once the smart card completes every transaction. When the user starts a new transaction, the smart card may detect whether the last transaction is confirmed by the user, and respond to operations of this transaction only if the last transaction is confirmed. Since the criminal cannot confirm a transaction on the smart card after the identity theft, the smart card cannot respond to operations of the second transaction, such that the identity theft is prevented, thus reducing a security risk of the account of the user's smart card due to continuous identity thefts, avoiding continuous attacks and improving the safety of account.

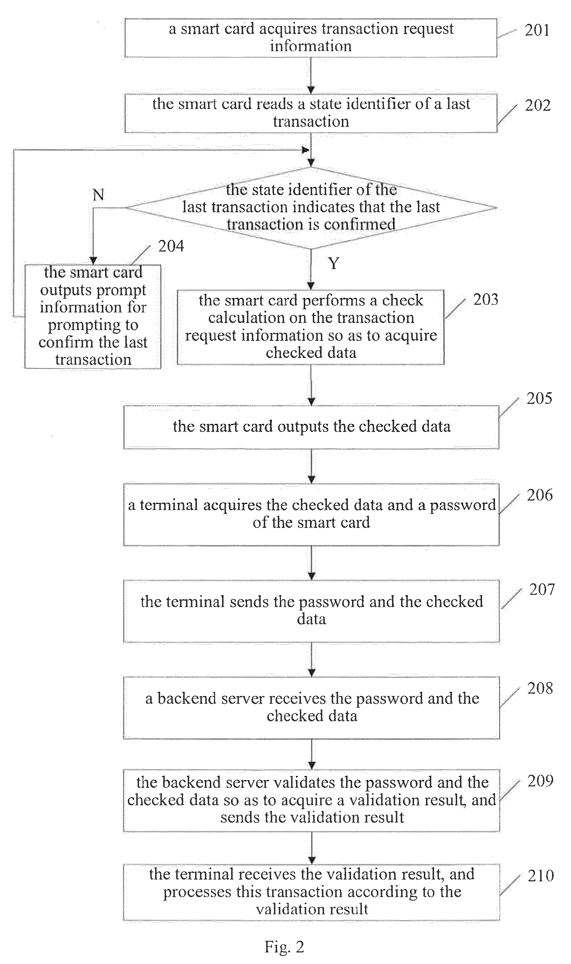

Fig. 2 is a flow chart showing an embodiment of a method for processing transaction data provided in the present disclosure. The method embodiment shown in Fig. 2 includes the following steps.

In step 201, a smart card acquires transaction request information.

In step 202, the smart card reads a state identifier of a last transaction.

If the state identifier of the last transaction indicates that the last transaction is confirmed, step 203 is executed, otherwise, step 204 is executed.

In step 203, the smart card performs a check calculation on the transaction request information so as to acquire checked data, and then step 205 is executed.

In step 204, the smart card outputs prompt information for confirming the last transaction.

In step 205, the smart card outputs the checked data.

Operations in steps 201-205 are identical to that in steps 101-104, which is not described here again.

In step 206, a terminal acquires the checked data and a password of the smart card.

In step 207, the terminal sends the password and the checked data.

In step 208, a backend server receives the password and the checked data.

In step 209, the backend server validates the password and the checked data so as to acquire a validation result, and sends the validation result.

The backend server validates the password and checked data respectively, the order of validating the password and checked data is not limited. If both the password and the checked data pass the validation, the backend server sends the validation result indicating the validation is successful, otherwise the backend server sends the validation result indicating the validation is failed.

In step 210, the terminal receives the validation result, and processes this transaction according to the validation result.

Specifically, if the validation result received by the terminal indicates that the validation is successful, this transaction is completed and a message indicating that the transaction is successful is displayed. If the validation result received by the terminal indicates that the validation is failed, a message indicating that the transaction is failed is displayed.

Compared to the related art, method embodiments provided in the present disclosure require the user to confirm every transaction on the smart card once the smart card completes every transaction. When the user starts a new transaction, the smart card may detect whether the last transaction is confirmed by the user, and respond to operations of this transaction if the last transaction is confirmed. Since the criminal cannot confirm a transaction on the smart card after the identity theft, the smart card cannot respond to operations of the next transaction, such that the identity theft is prevented, thus reducing a security risk of the account of the user's smart card due to continuous identity thefts, avoiding continuous attacks and improving the safety of account. Also, under the premise of reducing the risk of continuous identity thefts occurring on the transaction system including the smart card, no change in the hardware structures of the terminal and the backend server is required, such that the method is easy to implement and the hardware cost is low.

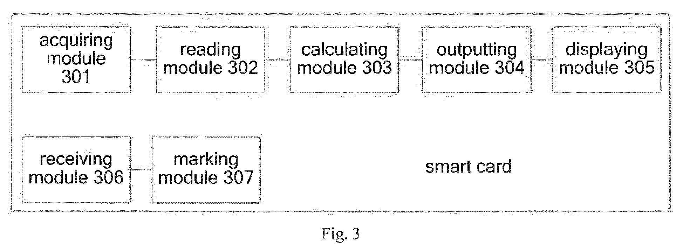

Fig. 3 is a block diagram of an embodiment of a smart card provided in the present disclosure. The embodiment shown in Fig. 3 includes an acquiring module 301, a reading module 302, a calculating module 303, an outputting module 304, a displaying module 305, a receiving module 306 and a marking module 307.

The acquiring module 301 is configured to acquire transaction request information.

The reading module 302 is connected to the acquiring module 301, and configured to read a state identifier of a last transaction after receiving the transaction request information.

The calculating module 303 is connected to the reading module 302, and configured to perform a check calculation on the transaction request information so as to acquire checked data if the state identifier of the last transaction indicates that the last transaction is confirmed.

The outputting module 304 is configured to output the checked data and to store transaction information of this transaction into a transaction log so as to complete this transaction.

The displaying module 305 is configured to display key information of this transaction after this transaction is completed.

The receiving module 306 is configured to receive a confirmation operation for the key information of this transaction.

The marking module 307 is connected to the receiving module 306, and configured to mark a state identifier of this transaction as a confirmed identifier according to the confirmation operation, if the receiving module 306 receives the confirmation operation for the key information of this transaction within a predetermined period of time.

In the smart card provided in this embodiment, the smart card is a dual interface card. The acquiring module 301 may acquire the transaction request information in a contact manner or in a contactless manner. The reading module 302 reads information about whether the last transaction is confirmed, if yes, it indicates that the user knows the transaction, and then the calculating module 303 may perform the check calculation on the transaction request according to a check calculation method in related art so as to acquire the checked data, and the checked data is outputted by the outputting module 304. After completing the process of this transaction, the displaying module 305 outputs the key information of this transaction, and the marking module 307 marks the state identifier as the confirmed identifier according to the confirmation operation if the receiving module 306 receives the confirmation operation for this transaction.

After the state identifier of the last transaction is read, the outputting module 304 is further configured to output prompt information for confirming the last transaction, if the state identifier of the last transaction indicates that the last transaction is not confirmed.

The marking module 307 is further configured to mark the state identifier of this transaction as an unconfirmed identifier, if the receiving module 306 does not receive the confirmation operation for the key information of this transaction within the predetermined period of time.

The confirmation operation is inputting a confirmation password. The marking module 307 includes: a validating unit, configured to validate the confirmation password; and a marking unit, configured to mark the state identifier of this transaction as the confirmed identifier if the confirmation password is validated successfully.

It can be seen from this step that, by validating the confirmation operation via the confirmation password, the identity verification of the owner conducting the confirmation operation may be realized, thus further ensuring the safety of transaction and reducing the possibility of identity theft.

The smart card further includes a confirm button for receiving the confirmation for transaction information of this transaction.

It is easy to confirm the transaction via the confirm button, and less change is made in the structure of smart card, which is easy to implement. In addition, the transaction is confirmed via the confirmation password. Since the complexity of the confirmation password is high, the occurrence of confirmation operations due to a misoperation from the owner may be reduced. In addition, the confirmation password may be validated in sequent steps so as to realize a safety validation.

Compared to the related art, embodiments provided in the present disclosure require the user to confirm every transaction on the smart card once the smart card completes every transaction. When the user starts a new transaction, the smart card may detect whether the last transaction is confirmed by the user, and respond to operations of this transaction only if the last transaction is confirmed. Since the criminal cannot confirm a transaction on the smart card after the identity theft, the smart card cannot respond to operations of the second transaction, such that the identity theft is prevented, thus reducing a security risk of the account of the user's smart card due to continuous identity thefts, avoiding continuous attacks and improving the safety of account.

A computer-readable storage medium having stored therein computer instructions that, when executed, causes the above method for processing transaction data to be performed.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by persons of ordinary skill in the art.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Persons of ordinary skill in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by persons of ordinary skill in the art that the above embodiments cannot be construed to limit the present disclosure, and changes, alternatives, and modifications can be made in the embodiments without departing from scope of the present disclosure.

## Claims

1. A method for processing transaction data, comprising:
acquiring by a smart card transaction request information;
reading by the smart card a state identifier of a last transaction;
performing by the smart card a check calculation on the transaction request information so as to acquire checked data, if the state identifier of the last transaction indicates that the last transaction is confirmed,;
outputting by the smart card the checked data and storing by the smart card transaction information of this transaction into a transaction log so as to complete this transaction;
displaying by the smart card key information of this transaction after this transaction is completed; and
marking by the smart card a state identifier of this transaction as a confirmed identifier according to a confirmation operation, if the smart card receives the confirmation operation for the key information of this transaction within a predetermined period of time.

2. The method according to claim 1, further comprising:
outputting by the smart card prompt information for confirming the last transaction, if the state identifier of the last transaction indicates that the last transaction is not confirmed.

3. The method according to claim 1 or 2, wherein the key information comprises at least one of a transaction amount, transaction time and payee account information.

4. The method according to any one of claims 1-3, further comprising:
marking by the smart card the state identifier of this transaction as an unconfirmed identifier, if the smart card does not receive the confirmation operation for the key information of this transaction within the predetermined period of time.

5. The method according to any one of claims 1-4, wherein the confirmation operation is inputting a confirmation password.

6. The method according to claim 5, wherein marking by the smart card a state identifier of this transaction as a confirmed identifier according to a confirmation operation comprising:
validating by the smart card the confirmation password, and marking by the smart card the state identifier of this transaction as the confirmed identifier if the confirmation password is validated successfully.

7. A method for processing transaction data, comprising:
acquiring by a smart card transaction request information;
reading by the smart card a state identifier of a last transaction;
performing by the smart card a check calculation on the transaction request information so as to acquire checked data, if the state identifier of the last transaction indicates that the last transaction is confirmed;
outputting by the smart card the checked data;
acquiring by a terminal the checked data and a password of the smart card, and sending by the terminal the password and the checked data;
receiving and validating by a backend server the password and the checked data so as to acquire a validation result, and sending by the backend server the validation result; and
receiving by the terminal the validation result, and processing by the terminal this transaction according to the validation result.

8. A smart card, comprising:
an acquiring module, configured to acquire transaction request information;
a reading module, connected to the acquiring module, and configured to read a state identifier of a last transaction after receiving the transaction request information;
a calculating module, connected to the reading module, and configured to perform a check calculation on the transaction request information so as to acquire checked data if the state identifier of the last transaction indicates that the last transaction is confirmed;
an outputting module, configured to output the checked data and to store transaction information of this transaction into a transaction log so as to complete this transaction;
a displaying module, configured to display key information of this transaction after this transaction is completed;
a receiving module, configured to receive a confirmation operation for the key information of this transaction; and
a marking module, connected to the receiving module, and configured to mark a state identifier of this transaction as a confirmed identifier according to the confirmation operation, if the receiving module receives the confirmation operation for the key information of this transaction within a predetermined period of time.

9. The smart card according to claim 8, wherein after the state identifier of the last transaction is read, the outputting module is further configured to:
output prompt information for confirming the last transaction, if the state identifier of the last transaction indicates that the last transaction is not confirmed.

10. The smart card according to claim 8 or 9, wherein the marking module is further configured to:
mark the state identifier of this transaction as an unconfirmed identifier, if the confirmation operation for the key information of this transaction is not received within the predetermined period of time.

11. The smart card according to any of claims 8-10, wherein the confirmation operation is inputting a confirmation password.

12. The smart card according to claim 11, wherein the marking module comprises:
a validating unit, configured to validate the confirmation password; and
a marking unit, configured to mark the state identifier of this transaction as the confirmed identifier if the confirmation password is validated successfully.

13. A computer-readable storage medium having stored therein computer instructions that, when executed, causes the method for processing transaction data according to any one of claims 1-7 to be performed.
